# EUROPEAN PATENT APPLICATION

(11) **EP 0 796 019 A1**
(43) Date of publication of application: **17.09.1997**
(21) Application number: 97103330.3
(22) Date of filing: 28.02.1997
(51) Int. Cl.: H04N 9/78

(54) **Y/C separating circuit**

(30) Priority: 15.03.1996 JP 59073/96
(71) Applicant: MOTOROLA, INC., Schaumburg, IL 60196 (US)
(72) Inventor: Saionji, Osamu, Ibaragi-shi, Osaka 567 (JP); Miyaura, Osamu, Kawanishi-shi, Hyogo 666-01 (JP)
(74) Representative: Hudson, Peter David

(57) **Abstract**

An object of the present invention is to provide a Y/C separating circuit which is able to separate a chroma signal and a luminance signal from a composite video signal which does not correlate in the vertical direction.

A Y/C separating circuit extracts a frequency component of a chroma signal band from a composite video signal to produce a chroma band signal, delays the composite video signal by an n number of horizontal scanning periods to produce a delayed composite video signal, extracts a frequency component of the chroma signal band from a delayed composite video signal to produce a delayed chroma band signal, invert the chroma band signal to produce an inverted chroma band signal, detects a second largest signal level among the chroma band signal, the delayed chroma band signal, and the inverted chroma band signal as a second-order-level signal, subtracts the chroma band signal from the second-order-level signal to divide the resulting signal level by 2 so as to produce a signal which can be regarded as a chroma signal.

## Description

### TECHNICAL FIELD

The present invention relates to a Y/C separation circuit which separates a chroma signal and a luminance signal from a composite video signal.

### BACKGROUND

Recently, a 1H comb filter that uses a delay circuit with a one horizontal scanning period has been employed as a Y/C separating circuit incorporated into color displays, VTRs, and so forth.

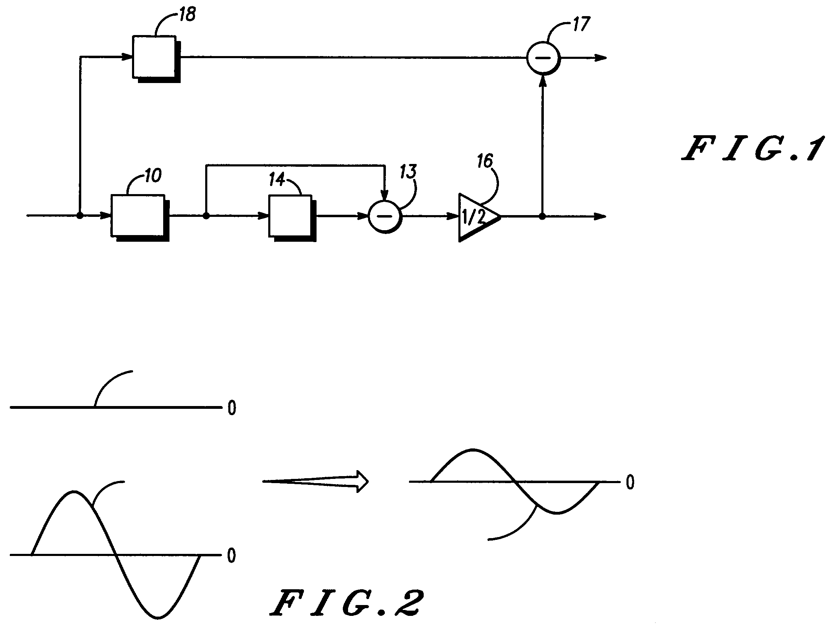

Fig. 1 illustrates one example of such a Y/C separating circuit based on the 1H comb filter.

In Fig. 1, a BPF (band-pass filter) 10 extracts a frequency component of a chroma signal band from an NTSC-format composite video signal, and provides it as a chroma band signal b to a 1H delay element 14 and a subtractor 13. The 1H delay element 14 delays the chroma band signal b by one horizontal scanning period and provides the resulting 1H delayed chroma signal c to the subtractor 13. The subtractor 13 subtracts the chroma band signal b from the 1H delayed chroma signal c and provides the resulting signal to a 1/2 coefficient multiplier 16. The 1/2 coefficient multiplier 16 multiplies by 1/2 the signal supplied from the subtractor 13, and outputs the resulting signal as a chroma signal, which is fed to a subtractor 17. The subtractor 17 subtracts the chroma signal from the composite video signal delayed by a predetermined time at a delay element 18, and outputs the resulting signal as a luminance signal.

Such a 1H comb filter is designed in consideration of the fact that the phase of the chroma signal component in the NTSC-format composite video signal is inverted per one horizontal scanning period, while the phase of the luminance signal is always kept constant.

More specifically, if from the composite video signal supplied, the composite video signal supplied one horizontal scanning period before that is subtracted (subtractor 13), then the luminance signal components in the composite video signal are canceled by each other to produce a zero level, so the chroma signal component in the composite video signal has its amplitude multiplied by two due to such subtraction. Thus, by multiplying by 1/2 the signal level resulting from this subtraction (1/2 coefficient multiplier), only the chroma signal is separated from the composite video signal. Therefore, by subtracting this separated chroma signal from the composite video signal supplied (subtractor 17), only the luminance signal is extracted.

As described above, with the 1H comb filter-based Y/C separating circuit, luminance and chroma signals are separated and extracted from the composite video signal by utilizing the fact that waveforms of the composite video signal are very similar between adjacent horizontal scanning periods and there is strong correlation relative to the vertical direction.

However, for some video signals, weakly correlated portions exist relative to the vertical direction, and vertical correlation may be lost due to the effects of extraneous noise and so on.

As shown in Fig. 2, for example, it is assume that a waveform of a chroma signal on the n-th line in the composite video signal supplied to such a Y/C separating circuit is Cₙ, and a signal waveform of the chroma signal on the (n-1)-th line, i.e., a line one horizontal scanning period prior to that n-th line, is Cₙ-1. As shown in Fig. 2, both of these signal waveforms have no correlation relative to the vertical direction.

These signals represented by Cₙ and Cₙ₋₁ are supplied to the subtractor 13 as the chroma band signal b and 1H delayed chroma band signal c, respectively. Thus, the signal derived by subtracting Cₙ from Cₙ₋₁ at the subtractor 13 is multiplied by 1/2 by the 1/2 coefficient multiplier 16 to produce the chroma signal.

Consequently, the chroma signal so separated by the Y/C separating circuit is different from both Cₙ and Cₙ₋₁.

In this way, if the composite video signal that is not vertically correlated is Y/C separated by the above 1H comb filter, luminance and chroma signals are not separated accurately, leading to degradation of image quality, such as dot interference and cross-color interference.

Accordingly, it is an object of the present invention to provide a Y/C separating circuit that can satisfactorily separate luminance and chroma signals, even from a composite video signal that is not vertically correlated.

### SUMMARY OF THE INVENTION

According to the present invention, a Y/C separating circuit for separating a chroma signal from a composite signal comprises:
delay means for delaying said composite video signal by an n number of horizontal scanning periods to produce a delayed composite video signal;
a first band-pass filter for extracting a frequency component of a chroma signal band from said composite video signal to produce a chroma band signal;
a second band-pass filter for extracting said frequency component of said chroma signal band from said delayed composite video signal to produce a delayed chroma band signal;
phase inversion means for inverting a phase of said chroma band signal to produce an inverted chroma band signal;
a second-order-level detection circuit for detecting a second largest signal level among said inverted chroma band signal, said chroma band signal and said delayed chroma band signal, as a second-order-level signal; and
calculating means for subtracting said chroma band signal from said second-order-level signal and for dividing the level of the resulting signal by 2 so as to produce a signal as said chroma signal.

According to the above means to fix the problem, if a composite video signal supplied has vertical correlation, both the band-pass filter and comb filter perform Y/C separation; whereas if the composite signal has no vertical correlation, only the band-pass filter performs Y/C separation. Thus, even if a composite video signals that is not vertically correlated is supplied, luminance and chroma signals can be obtained satisfactorily without causing dot interference and cross-color interference.

### BRIEF DESCRIPTION OF THE DRAWINGS

Fig. 1 is a schematic diagram illustrating a prior art Y/C separating circuit.

Fig. 2 is an illustration for explaining the operation of the prior art Y/C separating circuit where the composite video signal has no vertical correlation.

Fig. 3 is a schematic diagram illustrating a Y/C separating circuit according to the present invention.

Fig. 4 is a schematic diagram illustrating the internal structure of the second-order-level detection circuit 12.

Fig. 5 is an illustration for explaining the operation of the Y/C separating circuit according to the present invention where the composite video signal has vertical correlation.

Fig. 6 is an illustration for explaining the operation of the Y/C separating circuit according to the present invention where the composite video signal has vertical correlation.

Fig. 7 is an illustration for explaining the operation of the Y/C separating circuit according to the present invention where the composite video signal has no vertical correlation.

Fig. 8 is a schematic diagram illustrating a Y/C separating circuit according to another embodiment of the invention.

Fig. 9 is an illustration for explaining the operation of the Y/C separating circuit according to another embodiment of the present invention where the composite video signal has vertical correlation.

Fig. 10 is a an illustration for explaining the operation of the Y/C separating circuit according to another embodiment of the present invention where the composite video signal has vertical correlation.

Fig. 11 is a an illustration for explaining the operation of the Y/C separating circuit according to another embodiment of the present invention where the composite video signal has no vertical correlation.

Fig. 12 is a an illustration for explaining the operation of the Y/C separating circuit according to another embodiment of the present invention where the composite video signal has no vertical correlation.

### DETAILED DESCRIPTION OF THE PREFERED EMBODIMENT

Fig. 3 is a schematic diagram illustrating a Y/C separating circuit according to the present invention.

In Fig. 3, a BPF (band-pass filter) 10 extracts a frequency component of a chroma signal band from an NTSC-format composite video signal and provides the resulting signal as a chroma band signal b to a phase inverter 11, a second-order-level detection circuit 12, and a subtractor 13, respectively. The phase inverter 11 inverts the phase of the chroma band signal b supplied from the BPF 10 and provides the resulting signal as an inverted chroma band signal a to the second-order-level detection circuit 12. A 1H delay element 14 delays the composite video signal by one horizontal scanning period and provides the resulting 1H delayed composite video signal to a BPF (band-pass filter) 15. The BPF 15 extracts a frequency component of the chroma signal band from that 1H delayed composite video signal and provide the resulting 1H delayed chroma band signal c to the second-order-level detection circuit 12.

The second-order-level detection circuit 12 compares the levels of the inverted chroma band signal a, chroma band signal b, and 1H delayed chroma band signal c, and selects a second largest signal level among them. The second-order-level detection circuit 12 detects the signal level of the signal so selected, and provides it as a second-order-level signal S to the subtractor 13. It should be noted that if any two of the inverted chroma band signal a, chroma band signal b, and 1H delayed chroma band signal c are at the identical signal level, the second-order-level detection circuit 12 provides this identical signal level as the second-order-level signal S to the subtractor 13.

For example:
if the inverted chroma band signal a is equal to the chroma band signal b, and if those are smaller in signal level than the 1H delayed chroma band signal c, then the signal level of the inverted chroma band signal a is treated as the second-order-level signal S;
if the inverted chroma band signal a is equal to the 1H delayed chroma band signal c, and if those are greater in signal level than the chroma band signal b, then the signal level of the 1H delayed chroma band signal c is treated as the second-order-level signal S; or
if the chroma band signal b is equal to the 1H delayed chroma band signal c, and if those are smaller in signal level than the inverted chroma band signal a, then the signal level of the chroma band signal b is treated as the second-order-level signal S.

Fig. 4 is a schematic diagram illustrating one example of internal structure of the second-order-level detection circuit 12.

In Fig. 4, a comparator 120 provides a logic "1" signal to an EXNOR gate 123 and EXNOR gate 124, respectively, when the inverted chroma band signal a is equal to (=) the chroma band signal b, or if the inverted chroma band signal a is greater than (>) the chroma band signal b, while it provides a logic "0" signal to the EXNOR gate 123 and EXNOR gate 124, respectively, when the inverted chroma band signal a is smaller than (<) the chroma band signal b.

A comparator 121 provides a logic "1" signal to the EXNOR gate 123 and EXNOR gate 125, respectively, when the inverted chroma band signal a is smaller than the 1H delayed chroma band signal c, while it provides a logic "0" signal to the EXNOR gate 123 and EXNOR gate 125, respectively, when the inverted chroma band signal a is equal to the 1H delayed chroma band signal or when the inverted chroma band signal a is greater than the 1H delayed chroma band signal c.

A comparator 122 provides a logic "1" signal to the EXNOR gate 124 and EXNOR gate 125, respectively, when the chroma band signal b is equal to the 1H delayed chroma band signal c or when the chroma band signal b is greater than the 1H delayed chroma band signal c, while it provides a logic "0" signal to the EXNOR gate 124 and EXNOR gate 125, respectively, when the chroma band signal b is smaller than the 1H delayed chroma band signal c.

The EXNOR gate 123 provides a logic "1" SELa signal to a selector 126 when the logical values of the signals supplied from the comparators 120 and 121 are matched with each other, while it provides a logic "0" SELa signal to the selector 16 when the logical values of the signals supplied from the comparators 120 and 121 are mismatched.

That is, the EXNOR gate 123 provides a logic "1" SELa signal to the selector 126, indicating that the inverted chroma band signal a is the second-order-level signal, if:
Chroma band signal b ≤ inverted chroma band signal a < 1H delayed chroma band signal c;
   or
Chroma band signal b > inverted chroma band signal a ≥ 1H delayed chroma band signal c.

The EXNOR gate 124 provides a logic "1" SELb signal to the selector 126 when the logical values of the signals supplied from the comparators 120 and 122 are matched with each other, while it provides a logic "0" SELb signal to the selector 126 when the logical values of the signals supplied from the comparators 120 and 122 are mismatched.

That is, the EXNOR gate 124 provides a logic "1" SELb signal to the selector 126, indicating that the chroma band signal b is the second-order-level signal, if:
Inverted chroma band signal a ≥ chroma band signal b ≥ 1H delayed chroma band signal c;
   or
Inverted chroma band signal a < chroma band signal b < 1H delayed chroma band signal c.

The EXNOR gate 125 provides a logic "1" SELc signal to the selector 126 when the logical values of the signals supplied from the comparators 121 and 122 are matched with each other, while it provides a logic "0" SELc signal to the selector when the logical values of the signals supplied from the comparators 121 and 122 are mismatched.

That is, the EXNOR gate 125 provides a logic "1" SELc signal to the selector 126, indicating that the 1H delayed chroma band signal c is the second-order-level signal, if:
Inverted chroma band signal a < 1 H delayed chroma band signal c £ chroma band signal b;
   or
Inverted chroma band signal a ≥ 1H delayed chroma band signal c > chroma band signal b.

The selector 126 selects the inverted chroma band signal a among the inverted chroma band signal a, chroma band signal b, and 1H delayed chroma band signal c when a logic "1" SELa signal is supplied from the EXNOR gate 123, and outputs it as the second-order-level signal S. The selector 126 selects the chroma band signal b among the inverted chroma band signal a, chroma band signal b and 1H delayed chroma band signal c when a logic "1" SELb signal is supplied from the EXNOR gate 124, and outputs it as the second-order-level signal S. The selector 126 selects the 1H delayed chroma band signal c among the inverted chroma band signal a, chroma band signal b and 1H delayed chroma band signal c when a logic "1" SELc signal is supplied from the EXNOR gate 124, and outputs it as the second-order-level signal S.

Turning back to Fig. 3, the subtractor 13 subtracts the chroma band signal b from the resulting second-order-level signal S and provides the resulting signal to a 1/2 coefficient multiplier 16. The 1/2 coefficient multiplier 16 multiplies by 1/2 the signal supplied from the subtractor 13 and outputs the resulting signal as a chroma signal, which is in turn supplied to a subtractor 17.

The subtractor 17 subtracts the chroma signal from the composite video signal delayed by a predetermined time at a delay element 18, and output the resulting signal as a luminance signal.

Next, the operation of the Y/C separating circuit according to the present invention is described with reference to Figs. 5-7.

It should be appreciated that Figs. 5 and 6 are illustrations depicting signal waveforms observed when a vertically correlated composite video signal is supplied.

As shown in Fig. 5, it is assumed that a luminance signal component on the n-th line in the composite video signal is Yₙ, and that on the (n-1)-th line, which is one horizontal scanning period before the n-th line, is Yₙ₋₁. It is further assumed that these luminance signal components are contained in the band of the chroma signal. Then, these luminance signal components Yₙ and Yₙ₋₁ are provided to the second-order-level detection circuit 12 as the chroma band signal b and 1H delayed chroma band signal c, respectively. In addition, the inverted chroma band signal a, which has a phase of the luminance signal Yₙ inverted, is also supplied to the second-order-level detection circuit 12.

The second-order-level detection circuit 12 outputs a second-order-level signal S having the same waveform as that of the chroma band signal b and 1H delayed chroma band signal c, because the chroma band signal b and 1H delayed chroma band signal c are at the same level. The subtractor 13 subtracts the chroma band signal b from this second-order-level signal S to provide the resulting signal, i.e., zero-level signal, to the 1/2 coefficient multiplier 16. Thus, the zero-level chroma signal is then outputted as shown in Fig. 5. In other words, because Yₙ and Yₙ₋₁ shown in Fig. 5 are not chroma signals after all, zero level is provided as a chroma signal output.

Furthermore, as shown in Fig. 6, it is also assumed that a waveform of a chroma signal component on the n-th line in the composite video signal is Cₙ, and that on the (n-1)-th line, which is one horizontal scanning period before the n-th line, is Cₙ₋₁. As shown in Fig. 6, the chroma signal components Cₙ and Cₙ₋₁ have their phases inverted with each other, and they are vertically correlated. These chroma signal components Cₙ and Cₙ₋₁ are supplied to the second-order-level detection circuit 12 as the chroma band signal b and 1H delayed chroma band signal c, respectively. In addition, the inverted chroma band signal a, which has a phase of the chroma signal component Cₙ inverted, is also supplied to the second-order-level detection circuit 12.

The second-order-level detection circuit 12 outputs a second-order-level signal S having the same waveform as that of the inverted chroma band signal a and 1H delayed chroma band signal c because the inverted chroma band signal a and 1H delayed chroma band signal c are at the same signal level. The subtractor 13 subtracts the chroma band signal b from this second-order-level signal S to provide the resulting signal, i.e., a signal having twice the amplitude of the second-order-level signal S, to the 1/2 coefficient multiplier 16. Thus, a chroma signal having the same waveform as that of the chroma signal component Cₙ₋₁ is separated and outputted, as shown in Fig. 6.

On the other hand, Fig. 7 shows one example of signal waveforms where a composite video signal that is not vertically correlated is supplied to the Y/C separating circuit shown in Fig. 3.

As shown in Fig. 7, it is assumed that a waveform of a chroma signal component on the n-th line in the composite video signal is Cₙ, and that on the (n-1)-th line, which is one horizontal scanning period before the n-th line, is Cₙ₋₁. As shown in Fig. 7, the chroma signal component Cₙ is at zero level, and is not vertically correlated at all to the chroma signal component Cₙ₋₁, which is supplied one horizontal scanning period before that. The chroma signal components Cₙ and Cₙ₋₁ shown in Fig. 7 are supplied to the second-order-level detection circuit 12 as the chroma band signal b and 1H delayed chroma band signal c, respectively. In addition, the inverted chroma band signal a, which has a phase of the chrome signal component Cₙ inverted, is also supplied to the second-order-level detection circuit 12.

The second-order-level detection circuit 12 outputs a second-order-level signal S having the same waveform as that of the inverted chroma band signal a and chroma band signal b, i.e., a zero-level second-order-level signal, because the inverted chroma band signal a and chroma band signal b are at the same signal level. The subtractor 13 subtracts the chroma band signal b from the second-order-level signal S to provide the resulting signal, i.e., a zero-level signal, to the 1/2 coefficient multiplier 16. So, the same zero-level chroma signal as the chroma signal component Cₙ₋₁ can be separated as shown in Fig. 6.

Thus, the Y/C separating circuit according to the present invention permits luminance and chroma signals to be separated without improper operation, even when a composite video signal that is not vertically correlated is supplied.

It should be appreciated that although the Y/C separating circuit described above supports an NTSC-format composite video signal, it can also be adapted to support a PAL-format composite video signal by replacing the 1H delay element 14 shown in Fig. 3 with a 2H delay element.

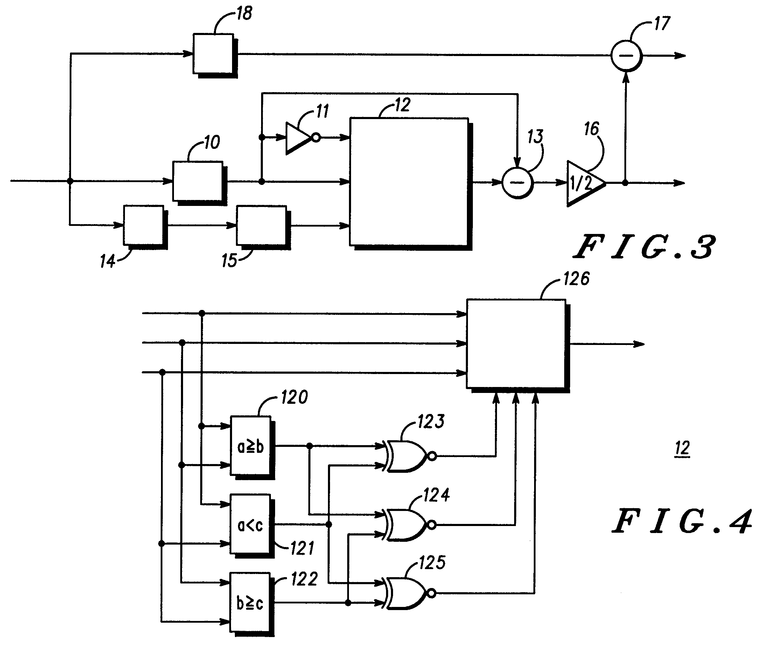

For a Y/C separating circuit compatible with a PAL-format composite video signal, the arrangement shown in Fig. 8 may be used to implement Y/C separation with greater accuracy.

In Fig. 8, a BPF 10 extracts a frequency component of a chroma signal band from a PAL-format composite video signal and provide the resulting signal as a chroma band signal b to a second-order-level detection circuit 12 and a subtractor 13, respectively. A 2H delay element 20 delays the composite video signal by two horizontal scanning periods and provides the resulting 2H delayed composite video to a BPF 15. The BPF 15 extracts a frequency component of a chroma signal band from the 2H delayed composite video signal and provides the resulting signal as a 2H delayed chroma band signal c to the second-order-level detection circuit 12.

The second-order-level detection circuit 12 compares the signal levels of the zero-level, chroma band signal b, and 2H delayed chroma band signal c, and sorts them according to the magnitude of their signal levels into first, second, and third orders. It should be appreciated that even if two of those three signals are of the same signal level, they are sorted into such three orders.

Next, the second-order-level detection circuit 12 detects the signal level that corresponds to the second order of those three orders, and provide it to a subtractor 13 as a second-order level signal S.

For example, if the chroma band signal b is classified as the second order, the signal level of that chroma band signal b is supplied to the subtractor 13 as the second-order-level signal S. Alternatively, if the zero level is classified as the second order, a zero-level second-order-level signal S is supplied to the subtractor 13.

The subtractor 13 subtracts the chroma band signal b from the resulting second-order-level signal S, and outputs the resulting signal as a chroma signal, which is in turn provided to a subtractor 17. The subtractor 17 subtracts the resulting chroma signal from the composite video signal supplied, which has been delayed by a predetermined time at a delay element 18, and outputs the resulting signal as a luminance signal.

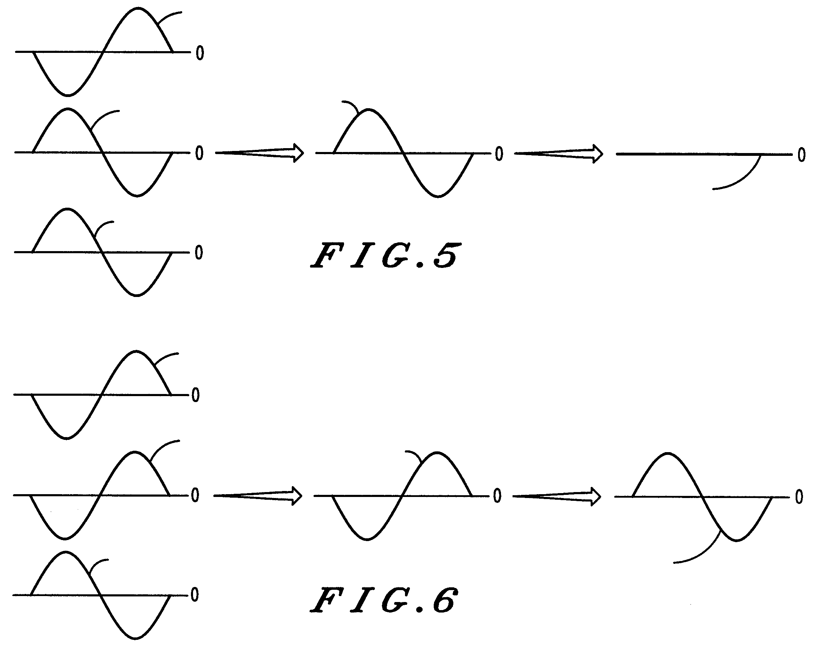

Next, the operation of the Y/C separating circuit shown in Fig. 8 is described with reference to Figs. 9-12.

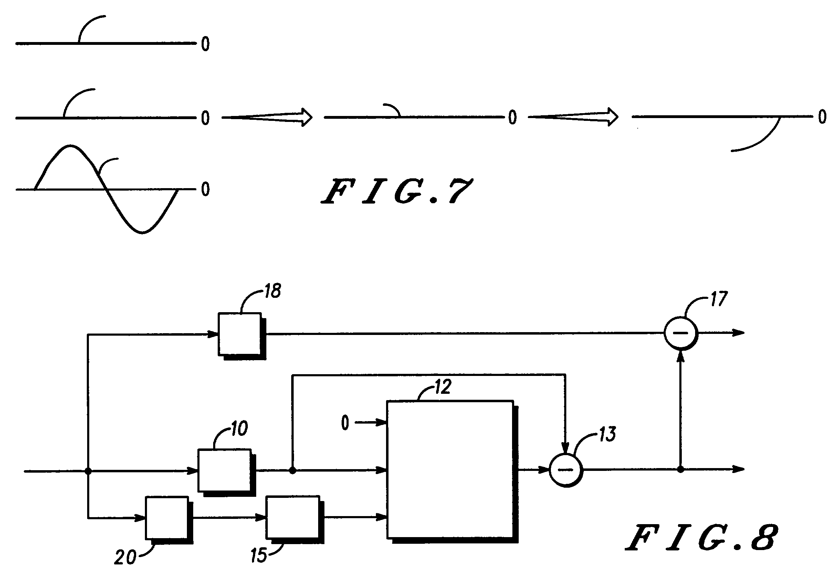

It should be noted that Figs. 9 and 10 are diagrams showing signal waveforms observed when a vertically correlated PAL-format composite video signal is supplied.

First, as shown in Fig. 9, it is assumed that a luminance signal component on the n-th line in the composite video signal is Yₙ, and that on the (n-2)-th line, which is two horizontal scanning periods before that n-th line, is Yₙ₋₂. It is further assumed that these luminance signal components are contained in the band of the chroma signal. Then, the luminance signal components Yₙ and Yₙ₋₂ are supplied to the second-order-level detection circuit 12 as a chroma band signal b and a 2H delayed chroma band signal c. The second-order-level detection circuit 12 compares the levels of zero level, chroma band signal b and 2H delayed chroma band signal c to select one of them having the second-order signal level, and outputs it as a second-order-level signal S. Thus, the second-order-level signal S having the same waveform as that of the chroma band signal b and 2H delayed chroma band signal c is outputted from the second-order-level detection circuit 12. The subtractor 13 subtracts the chroma band signal b from the resulting second-order-level signal S and outputs the resulting signal, i.e., zero-level signal, as a chroma signal. In other words, because Yₙ and Yₙ₋₂ shown in Fig. 9 are not chroma signal after all, zero level is outputted as a chroma signal output.

Furthermore, as shown in Fig. 10, it is also assumed that a waveform of a chroma signal component on the n-th line in the composite video signal is Cₙ, and that on the (n-2)-th line, which is two horizontal scanning periods before the n-th line, is Cₙ₋₂. As shown in Fig. 10, the chroma signal components Cₙ and Cₙ₋₂ have their phases inverted with each other, and they are vertically correlated. These chroma signal components Cₙ and Cₙ₋₂ are supplied to the second-order-level detection circuit 12 as the chroma band signal b and 2H delayed chroma band signal c, respectively.

The second-order-level detection circuit 12 compares the levels of the zero level, chroma band signal b and 2H delayed chroma band signal c to select one of them having the second-order signal level, and outputs it as a second-order-level signal S. Thus, a zero-level second-order-level signal S is outputted from the second-order-level detection circuit 12. The subtractor 13 subtracts the chroma band signal b from the resulting second-order-level signal S and outputs the resulting signal, i.e., a signal having a inverted phase of the chroma signal component Cₙ, as a chroma signal.

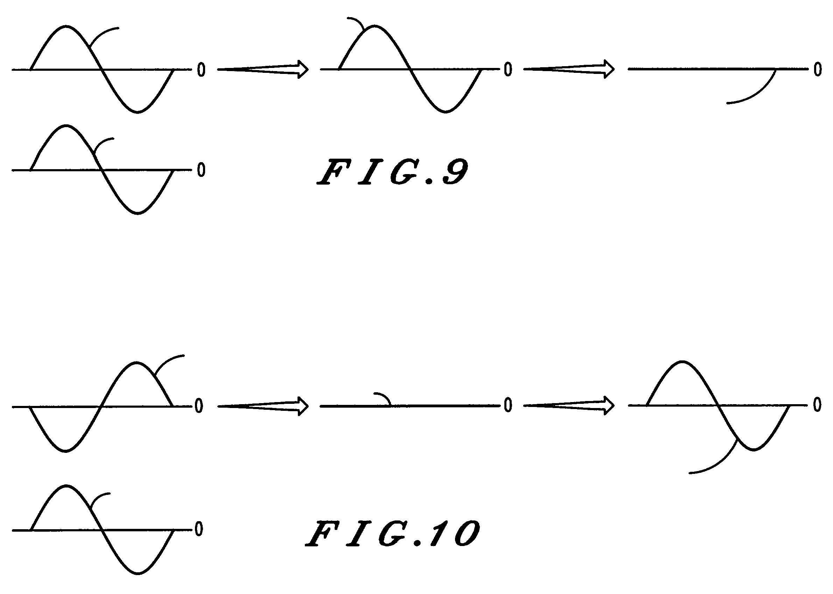

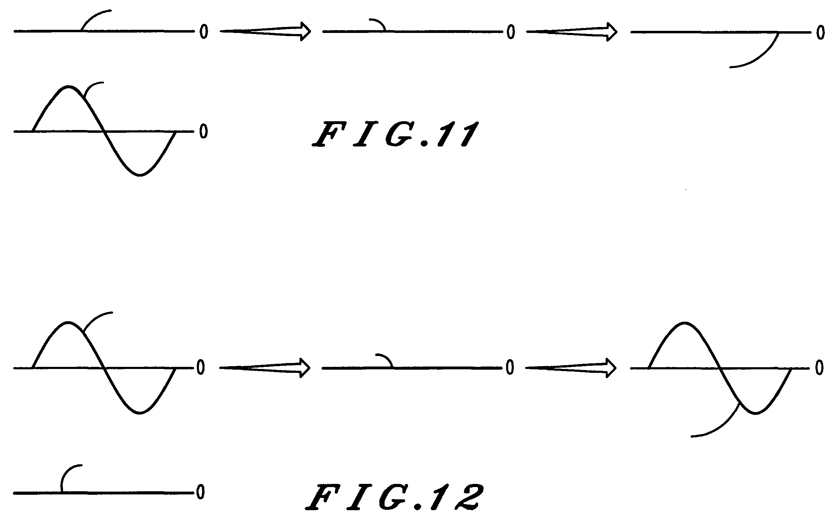

On the other hand, Figs. 11 and 12 show one example of signal waveforms observed when a PAL-format composite video signal that is not vertically correlated is supplied to the Y/C separating circuit shown in Fig. 8.

As shown in Fig. 11, it is assumed that a waveform of a chroma signal component on the n-th line in the composite video signal is Cₙ, and that on the (n-2)-th line, which is two horizontal scanning periods before the n-th line, is Cₙ₋₂. As shown in Fig. 11, the chroma signal component Cₙ is at zero level, and is not vertically correlated with Cₙ₋₂. These chroma signal components Cₙ and Cₙ₋₂ are supplied to the second-order-level detection circuit 12 as a chroma band signal b and a 2H delayed chroma band signal c, respectively. The second-order-level detection circuit 12 compares the levels of the zero level, chroma band signal b and 2H delayed chroma band signal c to select one of them having the second-order signal level, and outputs it as a second-order-level signal S. Thus, a zero-level second-order-level signal S is outputted from the second-order-level detection circuit 12. The subtractor 13 subtracts the chroma band signal b from this zero-level second-order-level signal S and outputs the resulting signal, i.e., a zero-level signal, as a chroma signal. Accordingly, the chroma signal of the same zero level as the chroma signal component Cₙ₋₂ can be separated as shown in Fig. 11.

Furthermore, as shown in Fig. 12, let us assume that a waveform of a chroma signal component on the n-th line in the composite video signal is Cₙ, and that on the (n-2)-th line, which is two horizontal scanning periods before the n-th line, is Cₙ₋₂. As shown in Fig. 11, the chroma signal component Cₙ₋₂ is at zero level, and is not vertically correlated with Cₙ. These chroma signal components Cₙ and Cₙ₋₂ are supplied to the second-order-level detection circuit 12 as a chroma band signal b and a 2H delayed chroma band signal c, respectively. The second-order-level detection circuit 12 compares the levels of the zero level, chroma band signal b and 2H delayed chroma band signal c to select one of them having the second-order signal level, and outputs it as a second-order-level signal S. Thus, the zero-level second-order-level signal S is outputted from the second-order-level detection circuit 12. The subtractor 13 subtracts the chroma band signal b from this zero-level second-order-level signal S, and outputs the resulting signal, i.e., a chroma signal having the same waveform as Cₙ as shown in Fig. 12.

As described above, the Y/C separating circuit shown in Fig. 8 performs Y/C separation through both the BPF and comb filter when the composite video signal supplied is vertically correlated, while it performs Y/C separation through the BPF alone when it is not vertically correlated.

It should be appreciated that although the Y/C separating circuit shown in Fig. 8 supports a PAL-format composite video signal, it may be adapted to support an NTSC-format composite video signal by replacing the H2 delay element 20 shown in Fig. 8 with a 1H delay element.

As described in detail above, the Y/C separating circuit according to the present invention can advantageously deliver satisfactory luminance and chroma signals without causing dot interference and cross-color interference, even when a composite video signal that is not vertically correlated is supplied.

## Claims

1. A Y/C separating circuit for separating a chroma signal from a composite video signal, which comprises:
delay means for delaying said composite video signal by an n number of horizontal scanning periods to produce a delayed composite video signal;
a first band-pass filter for extracting a frequency component of a chroma signal band from said composite video signal to produce a chroma band signal;
a second band-pass filter for extracting said frequency component of said chroma signal band from said delayed composite video signal to produce a delayed chroma band signal;
phase inversion means for inverting a phase of said chroma band signal to produce an inverted chroma band signal;
a second-order-level detection circuit for detecting a second largest signal level among said inverted chroma band signal, said chroma band signal and said delayed chroma band signal, as a second-order-level signal; and
calculating means for subtracting said chroma band signal from said second-order-level signal and for dividing the level of the resulting signal by 2 so as to produce a signal as said chroma signal.

2. A Y/C separating circuit according to claim 1, wherein if said composite video signal is an NTSC-format video signal, said number n is 1, and if said composite video signal is a PAL-format video signal, said number n is 2.

3. A Y/C separating circuit according to claim 1, wherein:
when said chroma band signal and said delayed chroma band signal are at the same level, said second-order-level detection circuit provides, as said second-order-level signal, a signal having the same level as said chroma band signal and said delayed chroma band signal;
when said inverted chroma band signal and said delayed chroma band signal are at the same level, said second-order-level detection circuit provides, as said second-order-level signal, a signal having the same level as said inverted chroma band signal and said delayed chroma band signal; and
when said inverted chroma band signal and said chroma band signal are at the same level, said second-order-level detection circuit provides, as said second-order-level signal, a signal having the same level as said inverted chroma band signal and said chroma band signal.

4. A Y/C separating circuit according to claim 1, further comprising a subtractor for separating, as a luminance signal, the signal obtained by subtracting said chroma signal from said composite video signal.

5. A Y/C separating circuit for separating a chroma signal from a composite video signal, which comprises:
delay means for delaying said composite video signal by an n number of horizontal scanning periods to produce a delayed composite video signal;
a first band-pass filter for extracting a frequency component of a chroma signal band from said composite video signal to produce a chroma band signal;
a second band-pass filter for extracting said frequency component of said chroma signal band from said delayed composite video signal to produce a delayed chroma band signal;
a second-order-level detection circuit for detecting a second largest signal level among said chroma band signal, said delayed chroma band signal and zero level, as a second-order-level signal; and
calculating means for subtracting said chroma band signal from said second-order-level signal to produce the resulting signal as said chroma signal.

6. A Y/C separating circuit according to claim 5, wherein if said composite video signal is an PAL-format video signal, said number n is 2, and if said composite video signal is a NTSC-format video signal, said number n is 1.

7. A Y/C separating circuit according to claim 5, wherein:
when said chroma band signal and said delayed chroma band signal are at the same level, said second-order-level detection circuit provides, as said second-order-level signal, a signal having the same level as said chroma band signal and said delayed chroma band signal; and
when either of said chroma band signal and said delayed chroma band signal is at zero level, said second-order-level detection circuit provides, as said second-order-level signal, a zero-level signal.
